# EUROPEAN PATENT APPLICATION

(11) **EP 1 167 305 A2**
(43) Date of publication of application: **02.01.2002**
(21) Application number: 01115896.1
(22) Date of filing: 29.06.2001
(51) Int. Cl.: C02F 3/28, C02F 1/28

(54) **Process for the treatment of liquid waste from oil mills**

(30) Priority: 30.06.2000 IT RM000357
(71) Applicant: Universita' Degli Studi Di Roma "La Sapienza", 00185 Roma (IT)
(72) Inventor: Majone, Mauro, 00154 Roma (IT); Beccari, Mario, 00199 Ostia, Antica (Province of Roma) (IT); Petrangeli Papini, Marco, 00185 Roma (IT); Torrisi, Lucia, 00125 Roma (IT)
(74) Representative: Gervasi, Gemma, Dr.

(57) **Abstract**

A process for anaerobic treatment of waste from oil mills is described, in which the starting vegetable water to be treated, having an initial concentration ≥ 60 gCOD/I, before undergoing biological treatment with anaerobic microbial association, is pre-treated with bentonite, said process being characterized in that the gCOD / g of bentonite ratio is ≥ 4 and in that the mixture is treated as such in the reactor without separation. Said process has the further characteristic of being carried out continuously.

## Description

### Field of the invention

The present invention relates to a process for treating waste from oil mills. In the present description, the aforesaid waste is also referred to as vegetable water or indicated by the initials VW. In particular, the process is an integrated chemico-physical and biological process for the continuous treatment of said waste.

### Prior art

Agro-industry activities involve the production of a range of liquid and solid waste which, albeit of a prevalently natural origin and character, calls for appropriate disposal in that it is responsible, to an important extent, for environmental pollution

Amongst the agro-industrial waste for which the anaerobic process has for some time now been taken into consideration is the waste deriving from the olive-oil industry. The processes of extraction of olive oil from the drupe produce a form of liquid waste referred to as vegetable water (VW), which is highly pollutant and somewhat difficult to treat.

The problems linked to the disposal of VW derive from:
- presence, in the waste, of phytotoxic and antimicrobial substances (compounds of a phenolic type and long-chain fatty acids) that render the degree of biodegradability poor;
- high concentration (indicative values of COD of between 100 and 200 g/l and of BOD₅ of between 20 and 100 g/l);
- quantity of waste (between 40 wt% and 110 wt% with respect to the olives);
- seasonality of the production cycle (the olive-oil campaign lasts from 2 to 6 months according to the geographical area);
- fractioning of the plants over the territory (notwithstanding the marked trend towards increase in the scale of production, at present about one half of the firms can be defined as medium-to-small enterprises),

This series of problems has, in the last few years, led to numerous research studies aimed at developing an effective and low cost treatment process, both by assessing the applicability of traditional treatment schemes already used successfully in other sectors and by studying in greater depth the chemico-physical characteristics of VW and its components. However, for disposal of VW there has not yet been found a definitive solution and, notwithstanding the efforts made so far, there is little evidence of any implementation at an industrial scale (except for those areas in which it has been possible to set up treatment plants at the level of associations of enterprises), whilst the costs of running such plants have always proven to have a major impact upon the costs of production of the oil.

On an industrial scale, the plants currently installed basically resort to thermal treatment of VW as such, and biological treatment on solutions diluted with urban waste. However, the results are not satisfactory from either an economic or a practical standpoint (1), (13), (11) (The numbers in brackets apply to the references at the end of the text).

The technological solutions proposed and studied can be classified as follows:
- Agronomic utilization, carried out in the form of controlled spreading on agricultural land; this use cannot be considered a depuration technology, but simply a temporary solution to the problem of disposal;
- Chemico-physical forms of treatment, characterized by high costs and unsatisfactory depuration of the waste;
- Treatment methods using membranes, which entail pre-treatment, via precipitation, coagulation or variations of pH, of the waste that is to undergo depuration, in order to improve the yield of the process in terms of flow and rejection so as to increase the average life of the membranes; however, some problems linked to fouling of the membranes, i.e., the depositing of jelly-like substances (gel layer) on the membranes, lead to a considerable reduction in membrane efficiency in a very short time;
- Heat treatments, such as burning, concentration by evaporation and cryogenic separation. Since heat treatments are destructive, they do not allow recovery of substances of interest, involve a high fuel consumption, and require a careful control of gas emissions. Cryodepuration treatment techniques have not so far yielded any results of particular interest;
- Biological treatments, which may be of an aerobic or anaerobic type according to whether the process of degradation takes place in the presence or absence of oxygen.

The aerobic process is quite unsatisfactory for the treatment of VW owing to a series of factors, such as the need for high dilutions of the VW, the need to add nutrients to balance the BOD₅:N:P ratio, the high energy consumption corresponding to 0.6-0.7 kWh/kg of COD removed, and the high production of sludge to be disposed of, which occupies more space than the VW treated.

The anaerobic process, which consists in the digestion, by anaerobic bacteria, of the organic substance dissolved in the VW, with the production of biogas composed of CO₂ and CH₄ having a low calorific power (4 000 kcal/m³), has been widely used in particular on other types of waste in that it provides energy recovery (16).

Anaerobic depuration of waste from oil mills still displays technological problems, such as the need for a strong dilution of the VW owing to the inhibiting effect of the VW itself on biological activity, caused by the presence of phenol-type compounds and long-chain fatty acids.

Previous experimental work drew attention to some physico-chemical pretreatments which, even though do not represent a valid alternative in themselves, nevertheless, appeared promising for increasing the anaerobic treatability of the VW.

Hanaki *et al.* (7), Roy *et al.* (14), Koster and Cramer (8), Lolos *et al.* (10), and Angelidaki *et al.* (2) found that the addition of CaCl₂ (or CaO) improves degradation of both synthetic substrates (consisting of long-chain fatty acids either alone or in the presence of another carbon source) and natural substrates (whole milk, vegetable water).

Angelidaki *et al.* (2) found that the addition of bentonite enables degradation of a synthetic substrate (glycerol trioleate) at an otherwise inhibiting concentration, with a more marked effect as compared to the addition of CaCl₂. Traditional phase-separation operations (centrifuging, filtration) or advanced ones (ultrafiltration, inverse osmosis) has proved effective for the removal of inhibiting/recalcitrant fractions, by "inhibiting fractions" being intended mainly lipids and phenols of low molecular weight, and by "recalcitrant fractions" being intended mainly phenols of high molecular weight.

The method of anaerobic digestion described in (16) is deemed advantageous in that it provides to feed the methanization reactor with the pre-treated mixture of VW together with lime and bentonite, without any need to separate solids from liquids. The results of the biodegradation tests conducted on the VW pre-treated with Ca(OH)₂ and bentonite and then sent directly for biological treatment, without phase separation, are particularly interesting. They make possible kinetics and conversions that are comparable with those of VW subjected to phase separation, but with the following two major additional advantages:
- The slow release of the adsorbed components enables recovery of the adsorbed COD without adversely affecting the kinetics of the process. Consequently, in these conditions, the kinetics corresponds to the maximum one obtained in pre-treated VW, whilst the production of methane corresponds to the one theoretically obtainable from the matrix as such.
- In this way, the need for a treatment to separate the concentrated currents is eliminated; in addition, it is possible to eliminate a unitary operation of the process, i.e., the phase separation between pre-treatment and fermentation.

In (16) it is described that, in non-continuous tests conducted at a laboratory scale, for very low initial COD contents, i.e., of about 7-14 gCOD/l, there is a final conversion into methane of approximately 70-75% (in g of CH₄ converted into COD with respect to the total g of COD). However, when more concentrated VW is fed in (up to 56.7 gCOD/l), the conversion scarcely reaches 2%; if instead 15 g/l of bentonite is added to the above concentrated VW, the conversion rises to 65.5% (gCOD / g of bentonite ratio equal to 3.78).

In order to render the process of disposal even more advantageous from the economic point of view, it would be desirable to feed the methanization reactor with more concentrated VW (COD higher than 56.7) so as to increase as much as possible the production of biogas per unit volume of reactor used (always maintaining the gCOD / g of bentonite ratio constant, or increasing it). In fact, it has up to now been believed that a reduction in the concentration of bentonite below 15g/l would lead to a drastic drop in the conversion yield. It has now been surprisingly found that, albeit using the process described in (16), for concentrations even of about 90 gCOD/l or higher and for amounts of bentonite of about 10 g/l, hence with gCOD / g of bentonite ratio greater than or equal to 4, the conversion yield is kept at around 65%. This yield datum, which was already in itself certainly not foreseeable, was unexpectedly further improved when, during experimentation, there was a transition from discontinuous laboratory conditions to continuous-process conditions.

### Summary of the invention

It is an object of the present invention to provide a process for the treatment of waste from oil mills that is at low costs and uses highly concentrated VW pre-treated with bentonite, with a gCOD / g of bentonite ratio greater than or equal to 4, preferably between 4 and 10, even more preferably about 9.

Another object of the invention is to provide a high-content anaerobic process in a reactor fed continuously with pre-treated VW without separation of the solid phase deriving from the pre-treatment from the liquid phase.

Further objects will be evident from the detailed description of the invention.

### Brief description of the figures

Fig. 1 is a schematic view of the continuous process according to the present invention.

Fig. 2 is a graph of methanization yield as a function of time in the discontinuous process.

### Detailed description of the invention

The anaerobic-treatment process according to the invention makes possible biological treatment of waste from oil mills (vegetable water, VW) with high initial concentration (≥60 gCOD/l) and organic contents (higher than 60 gCOD/I d, d = day) even in the presence of a high content of inhibiting compounds, mainly lipids and phenols. The process is based upon the combination of a physico-chemical treatment and a biological (anaerobic) treatment carried out simultaneously in a single stage (after prior pre-mixing of the reagents). The physico-chemical treatment, by means of the addition of natural adsorbent substances (bentonite) and chemical reagents (Ca(OH)₂), regulates the concentration of the inhibiting and non-inhibiting compounds (i.e., it markedly limits the inhibiting effect), in any case making them available for biological degradation.

Consequently, the bioconversion of vegetable water to methane can be carried out with the aforesaid high values of initial concentration (corresponding to low levels of dilution of the feeding) and of organic content.

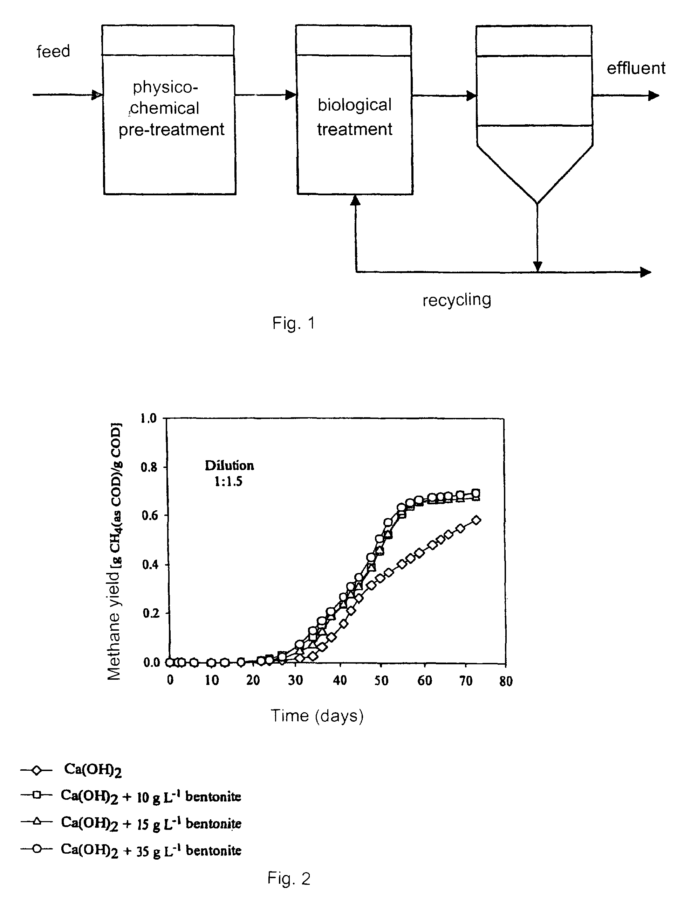

The said process is preferably carried out in continuous-flow conditions according to the diagram of Figure 1, in a plant which comprises a tank for pre-mixing of the reagents in the following proportions with respect to VW: water up to 0.5 I/I VW; bentonite up to 10 g/l VW; hydrated lime up to pH 6.5; and urea or another source of nitrogen to obtain a COD/N ratio not exceeding 50 g/g. The current thus mixed is sent on to any suitable anaerobic reactor that is able to operate with hydraulic residence time of between 9 and 12 d and a sludge age of between 40 and 50 d, for example an anaerobic contact reactor such as the one described in Stronach (15), where the reactor is completely mixed with sludge recirculation, by prior sludge thickening in a settler. The choice of a reactor with recirculation mixing represents the optimal choice for ensuring maximum dilution of any residual inhibiting substances, at the same time maintaining high residence times of the methanogenous biomass.

In these conditions the overall yield of the process is as follows: removal of total COD of over 80%; methane yield higher than 0.80; removal of lipids of over 90%; and removal of phenols of over 50%.

As compared to the prior art, the process operates at lower bentonite concentrations (for example, 10 as against 15 g/l, with a 33% reduction) and at a higher initial concentration (for example, approximately 90 as against less than 60 gCOD/l, with an increase of over 50%) with gCOD / g of bentonite ratios > 4, preferably between 4 and 10, more preferably around 9. These conditions are more advantageous from the operating standpoint than the ones envisaged in the known art, and certainly the results are unexpected if compared to the teachings of the prior art, according to which a decrease in efficiency of the process would be expected. In contrast, it has been found that, not only the new batch conditions show a marked improvement, but also that, with the transition from batch conditions to a continuous-flow process, the conversion that can be obtained is considerably higher (for example, 90% as against 65%, with a 40% increase).

Neither the maintenance nor, much less, the increase in performance was foreseeable, in that it is markedly dependent upon the setting-up of a synergy, which has proved positive, between the bentonite and the microbial association, which increases in the presence of the bentonite. In the previous literature (16), the process had been carried out in batch conditions; i.e., the microbial association had been separately developed and selected and had been set in contact with the bentonite only after adsorption of the inhibiting substances had already taken place on the latter. The positive effect of the bentonite had thus been demonstrated for just one cycle and in just the following sequence: adsorption in the absence of biomass, and subsequent desorption in the presence of biomass.

In the continuous process according to the invention, the VW mixed with fresh bentonite encounters, in the reactor, a bentonite already in the presence of biomass (both coming from recirculation). Consequently, the contact between inhibiting substances, bentonite, and microbial association occurs simultaneously. In addition, the microbial association grows and is selected in the presence of the bentonite and of the inhibiting substances. These conditions, which are certainly not comparable with the corresponding ones of the process described in (16), have unexpectedly created a positive synergy. It is believed that the increase in performance is due to the following reasons:
- The adsorbent capacity of the bentonite is expressed also in the presence of the biomass and remains unaltered in time for a high number of adsorption/desorption cycles. In addition, it is possible that the organic substances coming from the endogenous metabolism of the micro-organisms are adsorbed on the bentonite, increasing the affinity of the latter to the inhibiting substances contained in the VW, i.e., that the bentonite continuously re-circulated in the process has adsorbent properties higher than the fresh bentonite that is fed in;
- The presence of the bentonite contributes to developing and selecting a microbial association (for example, by surface adhesion) that is more active in biodegradation of the VW.

In conclusion, the treatment according to the invention with lime/bentonite is based, on the one hand, upon the removal by adsorption of the organic substance, and this enables effective removal of the inhibiting effects due to the presence of lipids and polyphenols, and, on the other hand, upon progressive desorption of the organic substance during the anaerobic process that makes the organic substance (including the lipids and, partially, the polyphenols) again available for methanogenesis. In practice, the treatment with lime/bentonite acts as a "regulator" of the concentration of inhibiting substances. The temporary removal of the inhibiting fractions enables an increase in the organic content and the kinetics of conversion; i.e., it enables minimization of the dilution of the waste. The desorption of the waste has the effect of making the entire biodegradable COD once more available, thus maximizing the yield in terms of bioconversion to methane. In addition, the association thus acclimated and selected proves particularly effective in bioconversion to methane. Consequently, the process developed makes it possible to operate at high organic contents with dilutions of the waste that are far lower than the ones so far reported in the scientific and technological literature. This results in far more contained reactor volumes, with a consequent reduction in costs.

In addition, the physico-chemical treatment can be carried out simultaneously with the biological process, so preventing the need for an intermediate phase separation and treatment and disposal of the concentrated current, which is typical of the majority of pre-treatment processes. Finally, physico-chemical pre-treatment is very simple as compared to other proposed techniques (e.g., enzymatic techniques, selective extraction, separation via membranes, selective oxidation, etc.), as well as being at low costs and not causing substantial modifications in the residual solid current of the biological process to be sent on for disposal.

The micro-organisms that are useful for the process according to the present invention are the ones, already familiar to a person skilled in the art, suitable for carrying out the anaerobic processes of disposal of waste polluted by organic content.

A preliminary economic analysis of the costs for transfer of the process onto an actual working scale, performed on the basis of the data obtained from experiments conducted at a laboratory scale, has demonstrated the economic advantage of running the depuration plant for a period of 6 months per year as compared to the alternative of a continuous operation throughout the year. The total cost net of profits has been found to amount to approximately 43 000 Italian lira per cubic metre of crude waste to be treated.

The following examples are provided to better illustrate the invention and are not be considered as limiting the scope of the invention itself.

### Example 1 - Characterization of VW

The VW came from a plant for producing olive oil obtained by centrifuging. The characteristics of the VW are given as ranges in Table 1, on account of the variability of VW.

**Table 1**

| Parameter | VW | Filtered VW |
|---|---|---|
| pH | 4.28 ÷ 4.38 | |
| TSS⁽¹⁾ (g/l) | 35.1 ÷ 40.3 | |
| VSS⁽²⁾ (g/l) | 33.8 ÷ 37.9 | |
| COD (g/l) | 109.4 ÷ 153.0 | 67.9 ÷ 75.9 |
| *Lipids* (g/l) | 10.1 ÷ 16.6 | |
| Oleic acid (g/l) | 0.24 ÷ 2.08 | |
| Phenols (g/l) | 7.24 ÷ 8.38 | 4.51 ÷ 7.25 |
| Acetic acid (g/l) | | 0.49 ÷ 3.23 |
| Propionic acid (g/l) | | trace amounts |
| Butyric acid (g/l) | | trace amounts |

| | | |
|---|---|---|
| ⁽¹⁾TSS = Total suspended solids | | |
| ⁽²⁾VSS = Volatile suspended solids | | |

### Example 2 - Pre-treatment

Variable quantities of bentonite (B-3378, Sigma) were added to 50 ml of VW, both with and without simultaneous addition of CaO (50 g/l). Lime was added until a pre-set pH was reached. Then all the samples were stirred for 2 hours and then left to stand for 24 hours.

### Example 3 - Discontinuous tests of anaerobic biotreatability

Samples of VW were treated according to the procedure described in the previous examples; i.e., Ca(OH)₂ was added up to a pH of 6.5 and with amounts of bentonite ranging between 0 and 35 g/l. A pre-determined aliquot of VW thus pre-treated was transferred into a 500-ml glass reactor. A nutrient solution (ASTM, 1987) was then added, followed by an inoculum, and finally distilled water up to a final volume of 300 ml (so as to obtain an initial concentration of about 90 gCOD/I. The inoculum was obtained by mixing an acclimated VW sludge (pH=8.0; T=35°C; concentration of fed substrate = 10 gCOD/l; organic content = 0.75 kgCOD m⁻³ d⁻¹) and a non-acclimated sludge from the anaerobic digester of the North-Rome waste-treatment plant. The content of the inoculum was the same in all the containers (1.1 gCOD/l). The anaerobic conditions in the filling operations were maintained by a continuous flow of nitrogen. The containers were set in a thermostatic bath at a temperature of 35°C under stirring. The initial pH was kept within the 8-8.5 range with 4 g/l of sodium bicarbonate and was adjusted throughout the test, with further additions whenever it dropped below 7.5.

The results are given in terms of methanogenous yield, i.e., the ratio between the COD of methane produced and the initial COD without any pre-treatment. The container of the samples of VW was kept under nitrogen flow to ensure anaerobic conditions. The methane content was evaluated by measuring the volume of gas produced and its methane concentration via gas-chromatography analysis.

As shown in Fig. 2, the methanogenous yield is not affected by the concentration of the bentonite, at least for values not lower than 10 g/l. Consequently, from the anaerobic biotreatability tests, it emerged that the use of an amount of bentonite of 10 g/l is sufficient to exploit the entire potential linked to the use of bentonite; this dosage was therefore adopted in the subsequent continuous tests.

### Example 4 - Continuous tests

The tests were carried out in an apparatus consisting of a glass container (1000 ml) and a methanogenous reactor, also made of glass (1780 ml), each being provided with a magnetic stirrer (Fig. 1). The system also comprised a cylindrical settler (1700 ml) provided with a slow-stirring system (1 r.p.m,), in which the mixture was thickened and recirculated to the methanogenous reactor. The flow rate of the recirculation current was equal to that of the incoming current. The reactor was inoculated with the acclimated sludge of the previous discontinuous test. The container was filled twice a week with VW at the desired dilution, Ca(OH)₂ up to a pH of 6.5, urea at 0.45 g/l, and bentonite at the concentration of 10 g/l with respect to the non-diluted VW. The pH of the methanogenous reactor was kept at 8.0 by addition of NaOH. At regular intervals, samples were taken of the fermentation broth and/or of the gaseous phase for analytical determinations.

The settler was kept under nitrogen flow to ensure anaerobic conditions. The results of the test suggest that physico-chemical pre-treatment with the addition of Ca(OH)₂ up to pH 6.5 and bentonite at a concentration of less than 15 g/l without subsequent solid/liquid separation may be transferred to a methanogenesis process conducted continuously.

After a test cycle at a low organic content (2-2.5 kg COD m⁻³d⁻¹) to set up the system from the experimental point of view, two cycles were carried out at higher organic contents (4.5 and 8.2 kg COD m⁻³d⁻¹) obtained thanks to high concentrations in the incoming current (43 and 89 gCOD/l, respectively). The results are shown in Table 2 (summary of experimental conditions), Table 3 (experimental results), Table 4 (efficiency of process) and Table 5 (mass balance). The data show that high values of removal of total COD (approx. 90%) and methanogenous yield (0.80-0.85 g of CH₄ (as COD)/g of tot. COD) were obtained, notwithstanding relatively high values of the organic content, and, above all, the extremely high values of the incoming concentration, thus confirming the essential role played by the bentonite in promoting both a high kinetics of methanogenesis (via adsorption of the inhibiting substances on the surface of the bentonite) and the high methanogenesis yields (via the release of the biodegradable material adsorbed at quite low rates such as not to re-introduce effects of inhibition during the biological process). The efficiency of the removal of the lipids was practically quantitative, and that of the phenols (to which the majority of the recalcitrant substances belong) was high (approximately 60%).

**Table 2 -**

| *Scheme of experimental conditions in the methanogenous reactor* | | | |
|---|---|---|---|
| Parameter | Unit | Cycle I | Cycle II |
| Temperature | °C | 35 | 35 |
| PH | | 8.0 | 8.0 |
| Flow rate | l/d | 0.110 | 0.097 |
| Volume | I | 1.05 | 1.05 |
| HRT⁽¹⁾ | d | 9.5 | 10.8 |
| Age of sludge | d | 44.7 | 48.3 |
| Organic content | kgCOD m⁻³d⁻¹ | 4.5 | 8.2 |
| Total Suspended Solids⁽²⁾ | g/l | 20.7 | 31.8 |
| Fixed Suspended Solids⁽³⁾ | g/l | 8.8 | 14.1 |

| | | | |
|---|---|---|---|
| ⁽¹⁾ Hydraulic Retention Time | | | |
| ⁽²⁾ Including bentonite | | | |
| ⁽³⁾ Mainly bentonite | | | |

**Table 3 -**

| *Experimental results* | | | | | |
|---|---|---|---|---|---|
| Parameter | Unit | Feed | | Final effluent | |
| | | Cycle I | Cycle II | Cycle I | Cycle II |
| Total COD | gCOD/l | 42.9 | 88.8 | 5.1 | 8.1 |
| Lipids | | 4.5 | 6.8 | 0.0 | 0.1 |
| Filtered Phenyls | g/l | 2.2 | 4.1 | 0.9 | 1.5 |
| Biogas⁽¹⁾ | g/l | | | | |
| Production (STP) | I/d | | | 1.7 | 3.4 |
| CH₄ production | % | | | 0.82 | 0.71 |

| | | | | | |
|---|---|---|---|---|---|
| ⁽¹⁾ Data referring to total production of biogas (in methanogenous reactor and in settler) | | | | | |

**Table 4 -**

| *Process efficiency* | | | |
|---|---|---|---|
| Parameter | Unit | Cycle I | Cycle II |
| Removal of total COD | % | 88 | 91 |
| Removal of lipids | % | 100 | 98 |
| Removal of phenols | % | 59 | 63 |
| Methane yield | g CH₄ (as COD)/ g tot. COD | 0.84 | 0.80 |

**Table 5 -**

| *Mass balance (gCOD, referring to a period of 48 days)* | | | |
|---|---|---|---|
| Flow | | Cycle I | Cycle II |
| Influent | | 227 | 412 |
| Effluent | from settler | 24 | 36 |
| | samples | 13 | 20 |
| | biogas | 190 | 332 |
| | total | 227 | 388 |
| Effluent/influent | | 1.00 | 0.94 |

The performance of the continuous-flow methanogenous reactor was very satisfactory, enabling high removal of COD (approx. 90%) and high methane yields (80-85%) to be obtained, notwithstanding the relatively high values of organic content adopted (8.2 gCOD/l d) and, above all, the low dilution ratios of the VW (1:1.5), thus confirming the role of the bentonite in achievement of both high kinetics and high methanization yields. In particular, the low dilution corresponds to a high initial concentration (approx. 90 gCOD/I), which, as may be seen from Table 6, is clearly higher than the values reported by previous experiments in the literature.

**Table 6 -**

| *Performance of anaerobic reactors fed with VW* | | | | | |
|---|---|---|---|---|---|
| Type of reactor ⁽¹⁾ | Volume (I) | ORL (gCOD/I d) | Feed (gCOD/I) | COD removed (%) | Reference |
| Contact | - | 4 | - | 80 - 85 | (3) |
| Contact | 30 | 4.2⁽²⁾ | - | 65 | (4) |
| UASB | 15 | 21.5 | 5 | 70 | (5) |
| UASB | 15 | 11.4 | 11.3 | 73 | (6) |
| Fixed bed | 15 | 5.5 | 12 | 65 - 70 | (9) |
| Fluidized bed | 3.5 | 7.8 | ⁽³⁾ | 62 | (12) |
| Batch | 0.3 | - | 56.7 | 65 - 70 | (16) |
| Contact | 1 | 8.2 | 88.8 | 91 | Present study |

| | | | | | |
|---|---|---|---|---|---|
| ⁽¹⁾ For type of reactor, see ref. (15). | | | | | |
| ⁽²⁾ 4.4 gCOD/I d of which 1.4 gCOD/I d coming from VW and 2.8 gCOD/I d coming from urban sludge | | | | | |
| ⁽³⁾ VW pre-treated with *Geotricum candidum* | | | | | |

### REFERENCES

1. Anelli G., II problema delle acque di vegetazione in provincia di Viterbo. Tavola Rotonda "Lo smaltimento delle acque reflue di frantoio", Spoleto, (1986).
2. Angelidaki I. *et al., Appl. Microbiol. Biotechnol.*, 33, pp. 469-472 (1990).
3. Aveni A., *Anaerobic Digestion and Carbohydrates Hydrolysis of Waste* (Edited by Ferrero G.L., Ferranti M.P. and Neveau H.), pp. 489-491, Elsevier, Barking.
4. Carrieri *et al., Proc. Int. Conf. on Environment Protection,* Ischia, Italy, October 5-7, 1988.
5. Boari G. *et al., Agricult. Wastes,* 10, 161-175, (1984).
6. Balice V. *et al., Ing. Sanit.,* 33(2), 69-76, (1985).
7. Hanaki K. *et al., Biotechnology and Bioengineering,* 23, pp. 1591-1610, (1981).
8. Koster I.W. *et al., Applied and Environmental Microbiology,* 53(2), pp. 403-409, (1987).
9. Morelli A. *et al., Biol. Wastes,* 32, 253-263, (1990).
10. Lolos G. *et al., J. Environ. Sci. Health,* A29(7), pp. 1349-1356, (1994).
11. Nardi P. *et al.,* Reflui a perdere, Ambiente CEEP, 27, IV, (1992).
12. Martin A. *et al., J. Chem. Biotechnol.,* 56, 155-162, (1993).
13. Olori L. *et al.,* Acque di vegetazione: the problematiche ambientali e gli aspetti igienico sanitari, (1990).
14. Roy F. *et al., Applied and Environmental Microbiology,* March 1985, pp. 702-705, (1985).
15. Stronach S.M. *et al., Biotechnology Monographs,* Springer-Verlag, Berlin, (1986).
16. Beccari *et al., Water Science and Technology,* 40(1), 347-355, (1999).

## Claims

1. A process for anaerobic treatment of waste from oil mills, in which the starting vegetable water to be treated, having an initial concentration ≥ 60 gCOD/l, before undergoing biological treatment with anaerobic microbial association, is pre-treated with bentonite, said process being **characterized in that** the gCOD / g of bentonite ratio is ≥ 4.

2. The process according to Claim 1, in which the gCOD / g of bentonite ratio ranges between 4 and 10.

3. The process according to Claim 1, in which the gCOD / g of bentonite ratio is about 9.

4. The process according to Claim 1, which is carried out in a reactor continuously fed with pre-treated vegetable water without performing a separation of the liquid phase from the solid phase deriving from the pre-treatment.

5. The process according to Claim 4, carried out in a plant which is provided with a tank for pre-mixing of the reagents in the following proportions with respect to the vegetable water: water, up to 0.5 I/I VW; bentonite, up to 10 g/l VW; hydrated lime, up to pH 6.5; and urea or other nitrogen source, to obtain a COD/N ratio of not more than 50 g/g; the mixture thus prepared being sent on to a anaerobic reactor capable of operating with a hydraulic residence time of between 9 and 12 d and with an age of sludge of between 40 and 50 d.

6. The process according to Claim 5, in which the reactor is a contact anaerobic reactor which is completely mixed with recirculation of sludge, said sludge resulting from thickening in a settler of the mixture coming from the anaerobic reactor and the microbial association.
